# EUROPÄISCHE PATENTSCHRIFT

(11) **EP 1 772 304 B1**
(45) Veröffentlichungstag und Bekanntmachung des Hinweises auf die Patenterteilung: **25.02.2009**
(21) Anmeldenummer: 06018744.0
(22) Anmeldetag: 07.09.2006
(51) Int. Cl.: B60N 2/02

(54) **Fahrzeugsitzanordnung mit einer elektrischen Verstellung**
Vehicle seat arrangement with electrical adjustment
Agencement de siège pour véhicule avec réglage électrique

(30) Priorität: 08.10.2005 DE 102005048279
(43) Veröffentlichungstag der Anmeldung: 11.04.2007
(73) Patentinhaber: Faurecia Autositze GmbH & Co. KG, 31655 Stadthagen (DE)
(72) Erfinder: Gerding, Rainer, Dr., 30419 Hannover (DE); Bethge, Thomas, 30974 Wennigsen (DE)
(74) Vertreter: Bremer, Ulrich

(56) Entgegenhaltungen:
- DE-A1- 10 318 417
- DE-A1- 19 961 799

## Beschreibung

Die Erfindung betrifft eine Fahrzeugsitzanordnung mit mindestens einer elektrischen Verstellung gemäß dem Oberbegriff von Anspruch 1. Eine derartige Anordnung ist aus der DE 103 18 417 A1 bekannt.

Zur Verstellung eines Fahrzeugsitzes bzw. einzelner Komponenten des Fahrzeugsitzes, z. B. der Rückenlehne, des Sitzkissens, der Kopfstütze oder des gesamten Sitzes bzw. Sitzrahmens werden insbesondere Gleichstrommotoren verwendet, die über eine Steuereinrichtung angesteuert werden.

Neben einer Komfortverstellung mit einer niedrigen Verstellgeschwindigkeit sind weiterhin Pre-Crash-Verstellungen bekannt, bei denen in der Regel eine höhere Verstellgeschwindigkeit eingestellt wird. Hierzu nimmt die Steuereinrichtung in der Regel ein Schnellverstellungssignal eines Sensors auf. Derartige Verstellungen sind z. B. aus der WO 01/45979 A1, DE 199 61 799 A1 und DE 197 49 838 A1 bekannt. Hierbei wird durch Sensoren des Fahrzeuges, z. B. Abstandssensoren, ein bald eintretender Crash-Fall, z. B. ein Aufprallen auf ein vor dem Fahrzeug befindliches Hindernis, erkannt und von der Steuereinrichtung ein Steuersignal an eine Verstelleinrichtung ausgegeben, damit diese noch vor dem Aufprall eine crashsichere Stellung einer Sitzkomponente einstellt.

Durch eine derartige Verstellung wird bereits in vielen Situationen eine höhere Crashsicherheit gewährleistet. Allerdings ist oftmals die nach Erkennen der Pre-Crash-Situation zur Verfügung stehende Zeit für die Verstellung der Fahrzeugkomponente zu kurz, insbesondere bei hohen Fahrgeschwindigkeiten des eigenen oder eines anderen Fahrzeuges oder einer zu geringen Leistung der Verstelleinrichtung.

Permanent erregte Gleichstrommotoren weisen bei geringem Gewicht und geringen Herstellungskosten schon bei niedrigen Stromstärken hohe Leistungen auf. Sie werden in der Regel so ausgelegt, dass der beim Anfahren des Gleichstrommotors bei Anlegen einer hohen Spannung erreichte hohe Motorstrom nicht zu einer unzulässigen, irreversiblen Entmagnetisierung der Permanentmagnete führt. Bei permanent erregten Gleichstrommotoren ist die maximal in einer Baugröße unterbringbare Leistung durch die verwendeten Magnete und das maximal zulässige magnetische Feld begrenzt. Bei Überschreiten des kritischen Wertes des magnetischen Feldes kommt es zu einer irreversiblen Entmagnetisierung der Permanentmagnete.

Der kritische Betriebspunkt ist der Anlauf, da hier der höchste Strom, der sogenannte Blockstrom, fließt. Besonders kritisch ist dieser Betriebszustand bei niedrigen Temperaturen, da dann der Widerstand der Kupferwicklung am niedrigsten und der Strom und damit auch das Magnetfeld am höchsten sind. Aus diesen Randbedingungen ergibt sich für jede vorgegebene Motorgeometrie eine maximal realisierbare Leistung. Die Gleichstrommotoren werden in ihrem Aufbau entsprechend so konstruiert, dass beim Anfahren keine zu hohen Blockströme auftreten.

Der Regelbereich der permanent erregten Gleichstrommotoren bei Sitzverstellungen ist somit begrenzt. Somit werden zum Erreichen hoher Verstellgeschwindigkeiten für Pre-Crash-Verstellungen im Allgemeinen Gleichstrommotoren großer Baugröße eingesetzt, die für große Blockströme ausgelegt sind. Dementsprechend ergeben sich hohe Herstellungskosten und große Einbauvolumina.

Die DE 103 18 417 A1 beschreibt eine Verstellanordnung zur Pre-Verstellung mindestens einer Fahrzeugkomponente, insbesondere eines Fahrzeugsitzes, mit einer Verstelleinrichtung mit zwei Eingangsanschlüssen und einer Steuereinrichtung zur Aufnahme eines Eingangssignals und Ausgabe eines Steuersignals an die Verstelleinrichtung zur Verstellung der Fahrzeugkomponente in eine crashsichere Stellung. Bei Erkennen einer Pre-Crash-Situation wird hierbei an die Eingangsanschlüsse der Verstelleinrichtung eine höhere Spannung angelegt, was insbesondere durch Reihenschaltung mit einem zusätzlichen Energiespeicher oder Verwendung einer dritten Versorgungsspannungsklemme erfolgen kann.

Der Erfindung liegt die Aufgabe zugrunde, eine Fahrzeugsitzanordnung zu schaffen, bei der relativ kostengünstig und mit geringem Aufwand eine Pre-Crash-Verstellung des Fahrzeugsitzes oder einer FahrzeugsitzKomponente erreicht wird.

Diese Aufgabe wird durch die Fahrzeugsitzanordnung nach Anspruch 1 gelöst. Die Unteransprüche beschreiben bevorzugte Weiterbildungen.

Der Erfindung liegt der Gedanke zugrunde, bei Erkennen einer Pre-Crash-Situation eine Verstellung über den Motor mit einer höheren Geschwindigkeit als bei einer Komfortverstellung zu erreichen, indem die dem Motor zugeführte Versorgungsspannung erhöht wird. Hierbei wird der Motor in einem maximal zulässigen Betriebsmodus gefahren, d.h. mit maximalem Strom bzw. maximaler Beschleunigung.

Zwar kann grundsätzlich bei Anlegen einer höheren Versorgungsspannung an den Gleichstrommotor eine Beschädigung des Motors durch Überhitzung auftreten; da erfindungsgemäß die höhere Spannung jedoch nur in der Pre-Crash-Situation angelegt wird, erfolgt die höhere Spannungszufuhr und somit höhere Leistungsabgabe des Motors nur über einen kleinen Zeitraum, so dass in der Regel keine oder allenfalls eine geringe Beeinträchtigung auftritt; in der Regel können die beteiligten Komponenten die größere Wärmemenge direkt aufnehmen.

Erfindungsgemäß wird somit ohne zusätzliche Verwendung pyrotechnischer Mittel und ohne allzu großen apparativen Aufwand eine schnelle, reversible Verstellung einer sicherheitsrelevanten Fahrzeugkomponente erreicht.

Erfindungsgemäß sind die einzustellende Pre-Crash-Position und die aktuelle Ausgangsposition gespeichert, so dass bei Ausbleiben des Crashs eine Rückstellung, z. B. mit der Komfortgeschwindigkeit möglich ist.

Hierbei ist der Gleichstrommotor derartig ausgelegt, dass bei einem Betrieb innerhalb der von der Steuereinrichtung zur Verfügung gestellten Eingangsspannungen zunächst ein Bereich mit unzulässig hohen Motorströmen oberhalb des kritischen Grenzstroms auftritt. Dies bedeutet, dass die Motorwicklung für die Dimensionierung des Motors und die Auslegung der Permanentmagneteinheit zunächst zu groß ausgelegt ist bzw. zu hohe Magnetfelder erzeugt. Bei einer derartigen Ausführungsform ist jedoch eine Strombegrenzungsschaltung zur Begrenzung des Motorstromes vorgesehen.

Erfindungsgemäß lässt sich die Motorauslegung in einem Kennlinienfeld darstellen, insbesondere bei Darstellung des Motorstroms in Abhängigkeit der Drehzahl, bei dem der unzulässige Bereich bei geringen Drehzahlen auftritt, wobei dieser Bereich durch die erfindungsgemäße Strombegrenzungsschaltung vermieden wird.

Dem liegt der erfindungsgemäße Gedanke zugrunde, nicht in herkömmlicher Weise einen Gleichstrommotor großvolumig derartig zu dimensionieren, dass er auch bei Auftreten des Blockstroms seine kritische Stromstärke und das hierdurch erreichte kritische Magnetfeld nicht überschreitet, sondern die Auslegung der Motorwicklung derartig vorzunehmen, dass diese bei den eingesetzten Permanentmagneten im Prinzip zunächst einen unzulässigen Betriebszustand zulässt, bei dem die irreversible Entmagnetisierung der Permanentmagnete auftreten könnte. Indem erfindungsgemäß die Motorstromspeisung nur über die Strombegrenzungsschaltung zugelassen wird, kann dieser von der Auslegung her zunächst mögliche Zustand bzw. Bereich seines Kennlinienfeldes wiederum vermieden werden.

Durch diese überraschende Maßnahme eines unzulässig ausgelegten Motors mit zusätzlicher Strombegrenzungsschaltung kann mit überraschend geringem zusätzlichem Aufwand bei relativ kleiner Baugröße und gegebenem Permanentmagneten eine hohe Schnellverstellung erreicht werden. In einem Anfahrzustand wird zunächst der Blockstrom auf den kritischen Grenzstrom bzw. unterhalb des kritischen Grenzstroms begrenzt, so dass keine Entmagnetisierung der Permanentmagnete auftritt. Der nunmehr hochfahrende Motor erreicht nachfolgend eine Grenz-Drehzahl bzw. Grenz-Verstellgeschwindigkeit, ab der bzw. oberhalb von der gemäß seinem Kennlinienfeld der aufgenommene Motorstrom und das hierdurch erreichte Motordrehmoment abfallen. Die Strombegrenzungsschaltung ist somit beim nachfolgenden Hochfahren des Gleichstrommotors nicht mehr aktiv. Es tritt somit bei der weiteren Verstellung mit höheren Verstellgeschwindigkeiten bzw. Motordrehzahlen keine Begrenzung der möglichen Leistung auf. Somit führt die erfindungsgemäße Motorauslegung zu keiner nennenswerten Verlangsamung der Schnellverstellung gegenüber größer ausgelegten Motoren mit höheren kritischen Grenz-Stromstärken, da allenfalls in der kurzzeitigen Anfahrphase niedrigere Geschwindigkeiten erreicht werden.

Die Strombegrenzungsschaltung kann insbesondere in der Steuereinrichtung integriert sein; sie kann weiterhin auch im Gleichstrommotor integriert oder als weiteres Bauteil vorgesehen sein. Erfindungsgemäß kann auch die Steuereinrichtung bereits in den Gleichstrommotor integriert sein oder Teil der Steuereinrichtung für den ganzen Sitz sein.

Die Steuereinrichtung kann z. B. Eingangsspannungen bis zur Versorgungsspannung des Bordnetzes, z. B. 12 V, bereitstellen. Das Kennlinienfeld bezieht sich hierbei auf den gesamten von der Steuereinrichtung ausgegebenen Spannungsbereich; im kritischen Anfahrbereich werden somit Spannungen bis z. B. zur Versorgungsspannung angelegt und der ausgegebene Strom begrenzt.

Die Regelung des Gleichstrommotors erfolgt hierbei erfindungsgemäß direkt über den Motorstrom bzw. Erregerstrom der Motorwicklungen, wobei Pulsweitenmodulation (PWM) eingesetzt werden kann.

Die Erfindung wird im Folgenden anhand der beiliegenden Zeichnungen an einer Ausführungsform erläutert. Es zeigen:
- Fig. 1a: einen Fahrzeugsitz mit Benutzer in Komfortstellung;
- Fig. 1b: einen Fahrzeugsitz mit Benutzer in crashsicherer Stellung;
- Fig. 2: ein Blockschaltbild einer erfindungsgemäßen Verstellanordnung;
- Fig. 3: ein erfindungsgemäß vorgesehenes Kennlinienfeld zur Darstellung der erfindungsgemäßen Regelung.

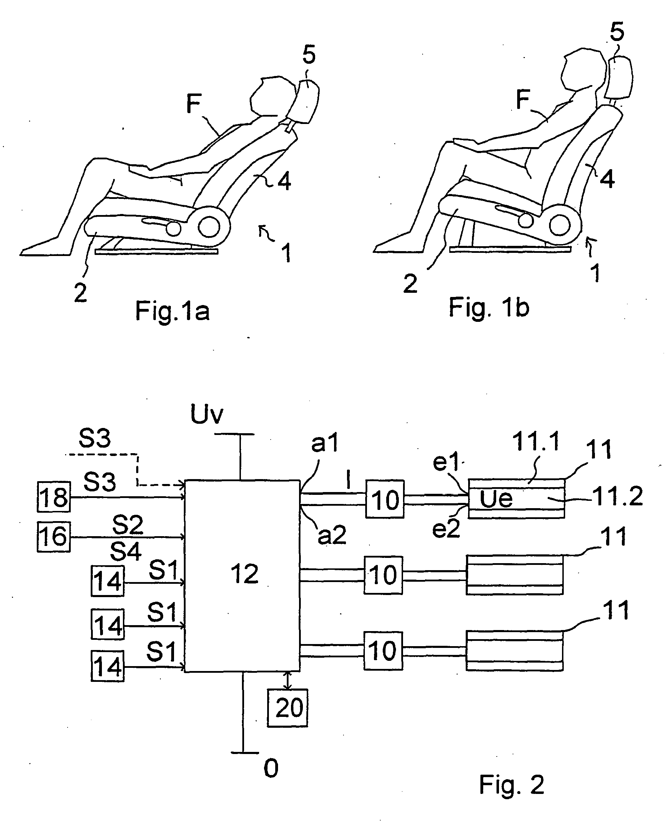

Eine Person F sitzt auf einem Fahrzeugsitz 1 mit Sitzkissen 2, Rückenlehne 4 und Kopfstütze 5. Hierbei ist in Fig. 1 a eine von der Person eingestellte Komfortstellung gezeigt. Bei Erkennen einer Pre-Crash-Situation wird der Fahrzeugsitz 1 in die in Fig. 1b gezeigte crashsichere Stellung mit vorgestellter Rückenlehne 4 und vorne angehobenem Sitzkissen 2 verstellt. Gegebenenfalls können zusätzlich die Kopfstütze 5 und/oder der gesamte Sitz 1 nach vorne verstellt werden. Die Verstellungen erfolgen über GleichstromMotoren 11, die gemäß dem Blockschaltbild der Fig. 2 jeweils über eine Strombegrenzungseinrichtung 10 von einer gemeinsamen Steuereinrichtung 12 mit Gleichstrom versorgt werden. Die Steuereinrichtung 12 kann ein- oder mehrteilig ausgebildet sein und ist an die Bordspannung UV von z.B. 12 V des Fahrzeuges angeschlossen. Die Steuereinrichtung 12 weist für jeden der z.B. drei parallel angeschlossenen Gleichstrommotoren 11 jeweils zwei Ausgänge a1, a2 auf, an denen je nach gewünschter Verstellrichtung eine jeweilige Polarität angelegt wird. Die Strombegrenzungsschaltungen 10 begrenzen den ausgegebenen Gleichstrom, wie weiter unten beschreiben wird, und geben ihn an die Eingangsanschlüsse e1, e2 des jeweiligen Gleichstrommotors 11 weiter. Die Verstellrichtung des Gleichstrommotors 11 kann somit durch die von der Steuereinrichtung 12 angelegte Polarität eingestellt werden. Vorteilhafterweise erfolgt eine Regelung der Gleichstrommotoren 11, wobei Positionssensoren 14 zur Messung der jeweiligen Positionen des zu verstellenden Sitzes 1 bzw. der Sitzkomponenten 2, 4, 5 vorgesehen sind, die Positionssignale S1 an die Steuereinrichtung 12 ausgeben. Die Regelung der Gleichstrommotoren 11 kann insbesondere direkt über den Motorstrom I bzw. Erregerstrom der Motorwicklungen erfolgen, wobei Pulsweitmodulation (PWM) eingesetzt werden kann.

Die Steuereinrichtung 12 nimmt Komfortverstellsignale S2 von einer vom Benutzer zu bedienenden Betätigungseinrichtung 16 auf, die durch ein Schaltfeld mit mehreren Schaltern oder auch durch mehrere Handhaben gebildet und innerhalb oder außerhalb des Fahrzeugsitzes 1 angeordnet sein kann. Aufgrund der Komfortverstellsignale S2 erfolgt eine Komfortverstellung der Gleichstrommotoren 11. Hierbei wird die Strombegrenzungsschaltung 10 in der Regel nicht wirksam, da lediglich geringe Ströme I ausgegeben werden.

Die Steuereinrichtung 12 nimmt weiterhin ein Pre-Crash-Signal S3 von einem Pre-Crash-Sensor 18 oder alternativ hierzu von einer weiteren Steuereinrichtung auf, die aus den ihr zur Verfügung stehenden Daten bzw. Signalen eine Pre-Crash-Situation erkannt hat. Bei Aufnahme des Pre-Crash-Signals S3 leitet die Steuereinrichtung 12 eine Pre-Crash-Verstellung mindestens eines, einiger oder aller Gleichstrommotoren 11 ein.

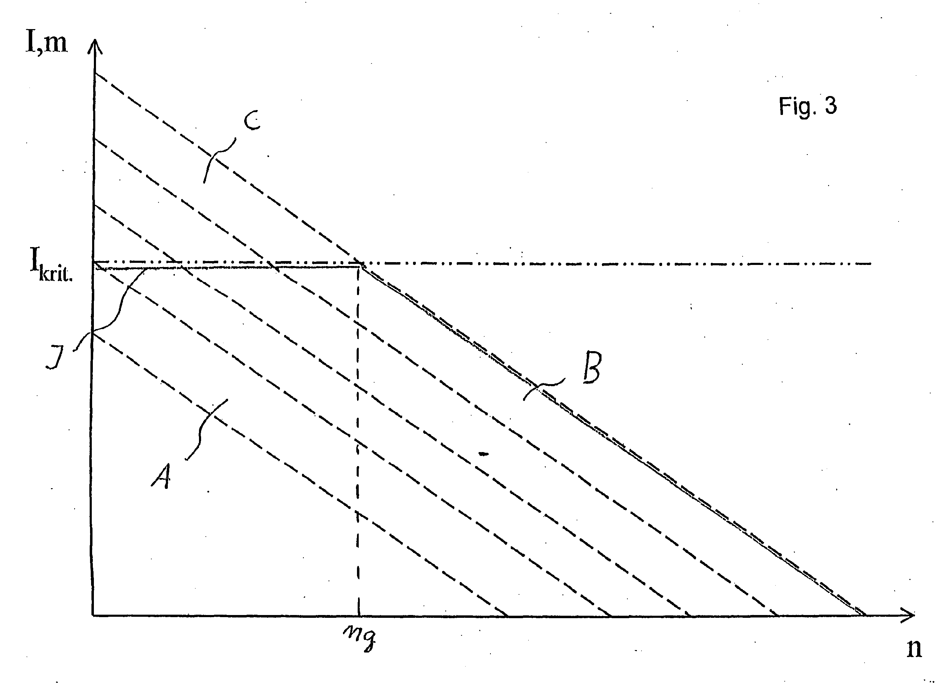

Die Steuereinrichtung 12 speichert jeweils die aktuellen Positionsdaten des Sitzes 1 bzw. der zu verstellenden Sitzkomponenten 2, 4, 5 in einem Speicher 20, der entsprechend auch als Teil der Steuereinrichtung 12 bzw. in diese integriert ausgebildet sein kann. Die Speicherung dieser Daten kann fortlaufend oder bei Aufnahme des Pre-Crash-Signals erfolgen. Bei der Pre-Crash-Verstellung werden die maximal zulässigen Ströme I ausgeben, wie nachfolgend mit Bezug zu Fig. 3 beschrieben wird, wodurch die maximale mögliche Schnellverstellung der Gleichstrommotoren 11 bewirkt wird. Nach Beendigung der Pre-Crash-Situation, d.h., wenn das Signal S3 z.B. wieder auf Null gesetzt ist, leitet die Steuereinrichtung 12 selbsttätig oder auch nach Eingabe eines entsprechenden Betätigungssignals S4 des Benutzers über z.B. einen Knopf der Betätigungseinrichtung 16 die Rückverstellung der Gleichstrommotoren 11 in die jeweils zuvor eingenommene Position auf, wozu die Steuereinrichtung 12 auf die im Speicher 20 gespeicherten Positionsdaten zurückgreift.

Die Gleichstrommotoren 11 weisen jeweils eine Permanentmagneteinrichtung 11.1 und mindestens eine Motorwicklung (Ankerwicklung) 11.2 auf. Gemäß einer bevorzugten Ausführungsform sind die Gleichstrommotoren 11 gemäß dem Kennlinienfeld der Fig. 3 ausgebildet, in dem der Motorstrom I gegen die Drehzahl n des Gleichstrommotors 11 aufgetragen ist.

Erfindungsgemäß ist in dem Kennlinienfeld der Fig. 3 der Motorstrom I gegen die Drehzahl n des Gleichstrommotors 11 aufgetragen. Da bei dem Gleichstrommotor 11 das erzeugte Motordrehmoment m proportional dem Magnetfeld und somit auch proportional dem Motorstrom I ist, stellt Fig. 3 entsprechend auch die Abhängigkeit des Motordrehmomentes m von der Motordrehzahl n dar. Das erreichbare Drehmoment m fällt mit zunehmender Drehzahl n, wobei sich die Gesamtleistung als Produkt des Motormomentes m und der Drehzahl n errechnet. Die gestrichelten Linien in Fig. 3 geben somit Kennlinien eines Motors bei verschiedenen Spannungen an. Erfindungsgemäß wird ein Gleichstrommotor 11 mit einer hohen Leistung ausgewählt, die durch die oberste gestrichelte Linie, die dem Betrieb bei maximaler Spannung entspricht, gekennzeichnet ist. Bei einem Betrieb in dem Kennlinienfeld unterhalb dieser obersten gestrichelten Linie wird somit entsprechend das Leistungsvermögen eines schwächeren Gleichstrommotors gefahren. Da erfindungsgemäß insbesondere PWM eingesetzt werden kann, können sich die eingezeichneten analogen Werte von I entsprechend als Mittelwerte bzw. durch die induktive Glättung der Pulse ergeben.

Bei dieser Ausführungsform ist der Gleichstrommotor 11 derartig dimensioniert, dass sein in Fig. 3 gezeigtes Kennlinienfeld einen Bereich C enthält, bei dem eine volle Bestromung zu einer unzulässigen Entmagnetisierung seiner Permanentmagnete 11.1 führen würde. In Fig. 3 ist zur Veranschaulichung eine kritische Stromstärke Iₖᵣᵢₜ. eingezeichnet, oberhalb von der, d. h. bei I > Iₖᵣᵢₜ, die unzulässige Entmagnetisierung der Permanentmagnete 11.1 irreversibel erfolgen würde und somit der Gleichstrommotor 11 zerstört wäre.

Erfindungsgemäß wird durch die Strombegrenzungsschaltung 10 der Motorstrom I somit unter den Wert lₖᵣᵢₜ. beschränkt. In dem Kennlinienfeld der Fig. 3 ergeben sich somit drei Bereiche: bei niedrigen Motordrehzahlen n (bis zu einem als solchem nicht relevanten Wert ng) ein Bereich A, der nach oben durch I < Iₖᵣᵢₜ begrenzt ist, ein sich zu höheren Drehzahlen n anschließender Bereich B, der nach oben durch die Motorkennlinie begrenzt ist, und der apparativ mögliche, aber durch die Strombegrenzungseinrichtung 10 ausgeschlossene Bereich C.

Bei der Pre-Crash-Verstellung des Fahrzeugsitzes 1 bzw. der Sitzkomponente 2, 4 und 5 wird bei Eingang des Pre-Crash-Signals S3 bei einer Bestromung der Motorwicklung 11.2 somit zunächst der Motorstrom I gemäß der eingezeichneten Linie auf I < Iₖᵣᵢₜ. begrenzt, bis der anfahrende Gleichstrommotor 11 die Drehzahl ng erreicht. Nachfolgend fällt der Motorstrom I entlang der obersten gestrichelten Kennlinie ab. Verstellungen können grundsätzlich in beide Richtungen, z. B. auch bei einer Rück-Verstellung erreicht werden, so dass das Kennlinienfeld grundsätzlich bei beiden Polaritäten relevant ist. Bei einer Pre-Crash-Verstellung ist jedoch im Allgemeinen nur die Polarität der Vorwärtsverstellung relevant, da die Rückverstellung langsamer erfolgt.

In dem Kennlinienfeld der Fig. 3 wird die Komfortverstellung somit im Allgemeinen bei niedrigeren gestrichelten Kennlinien gefahren als die Pre-Crash-Verstellung.

Alternativ zu der Motorauslegung der Fig. 3 sind grundsätzlich auch andere Gleichstrommotoren einsetzbar.

## Patentansprüche

1. Fahrzeugsitzanordnung mit mindestens einer elektrischen Verstellung,
wobei die Fahrzeugsitzanordnung (1) aufweist
einen Gleichstrommotor (11) zur Verstellung mindestens einer Fahrzeugsitzkomponente (2, 4, 5) mit Gleichstromanschlüssen (e1, e2) zur Aufnahme eines Motorstroms (I),
eine Steuereinrichtung (12) zur Steuerung oder Regelung des Gleichstrommotors (11), die in Abhängigkeit der einzustellenden Verstellgeschwindigkeit eine Gleichspannung (Ue) an die Gleichstromanschlüsse (e1, e2) anliegt,
wobei die Steuereinrichtung (12) bei Vorliegen eines Komfort-Verstellsignals (S2) den mindestens einen Gleichstrommotor (11) für eine langsame Komfortverstellung der mindestens einen Fahrzeugsitzkomporiente (2, 4, 5) ansteuert,
wobei die Steuereinrichtung (12) bei Vorliegen eines Pre-Crash-Signals (S3) den mindestens einen Gleichstrommotor (11) für eine Pre-Crash-Schnellverstellung der Fahrzeugkomponente (2, 4, 5) aus einer aktuellen Ausgangsposition in eine sichere Pre-Crash-Position ansteuert,
**dadurch gekennzeichnet, dass**
Einstelldaten der sicheren Pre-Crash-Position in einer Speichereinrichtung (20) gespeichert sind,
Einstelldaten der Ausgangsposition vor der Pre-Crash-Verstellung in einer Speichereinrichtung (20) gespeichert sind,
die Pre-Crash-Schnellverstellung mit einer maximal in dem jeweiligen Betriebspunkt zulässigen Belastung und Beschleunigung des Gleichstrommotors (11) durchgeführt wird, und
der Gleichstrommotor (11) mindestens eine mit den Gleichstromanschlüssen (e1. e2) verbundene Wicklung (11.2) und eine Permanent-magneteinheit (11.1) aufweist,
ein Kennlinienfeld des Gleichstrommotors (11) mindestens einen Bereich (C) aufweist, in dem Motorströme (I) auftreten, die größer als eine zur Erhaltung der Magnetisierung der Permanent-Magneteinheit kritische Grenz-Stromstärke (Iₖᵣᵢₜ) sind,
eine Strombegrenzungsschaltung (10) zur Begrenzung des durch die mindestens eine Wicklung (11.2) fließenden Motorstroms (I) auf die kritische Grenz-Stromstärke (Iₖᵣᵢₜ) oder unterhalb der kritischen Grenz-Stromstärke (Iₖᵣᵢₜ) vorgesehen ist, und
der unzulässige Bereich (C) bei geringen Motordrehzahlen (n) und hohem Motordrehmoment (m) auftritt.

2. Fahrzeugsitzanordnung nach Anspruch 1, **dadurch gekennzeichnet, dass** die Speichereinrichtung (20) in der Steuereinrichtung (12) integriert oder mit dieser verbunden ist.

3. Fahrzeugsitzanordnung nach Anspruch 1 oder 2, **dadurch gekennzeichnet, dass** bei nicht eingetretenen Crashfall die mindestens eine Fahrzeugsitzkomponente (2, 4, 5) automatisch oder nach Aufnahme eines Betätigungssignals (S4) in die zuletzt eingestellte Ausgangsposition zurückgefahren werden.

4. Fahrzeugsitzanordnung nach einem der vorherigen Ansprüche, **dadurch gekennzeichnet, dass** der unzulässige Bereich (C) bei einem Anfahrvorgang des Gleichstrommotors (11) bei der Pre-Crash-Verstellung relevant ist und durch die Strombegrenzungsschaltung (10) ausgeschlossen wird.

5. Fahrzeugsitzanordnung nach Anspruch 4, **dadurch gekennzeichnet, dass** der Gleichstrommotor (11) in dem Anfahrvorgang mit einem konstanten Motorstrom (I) unterhalb der Grenz-Stromstärke (Iₖᵣᵢₜ) betrieben wird bis zum Erreichen einer Grenz-Drehzahl (ng), oberhalb von der der Motorstrom (I) im Kennlinienfeld unterhalb der Grenz-Stromstärke (Iₖᵣᵢₜ) verläuft.

6. Fahrzeugsitzanordnung nach einem der vorhergehenden Ansprüche, **dadurch gekennzeichnet, dass** die Motordrehzahl (n) durch eine Regelung über Pulsweitenmodulation (PWM) eingestellt wird.

7. Fahrzeugsitzanordnung nach einem der vorhergehenden Ansprüche, **dadurch gekennzeichnet, dass** ein oder mehrere Gleichstrommotoren (11) zur Verstellung mindestens einer der folgenden Komponenten vorgesehen ist:
Längsverstellung des Sitzes (1),
Klappung oder Schwenkung der Rückenlehne (4),
Verstellung des Sitzkissens (2),
Höhenverstellung der Kopfstütze (5).

8. Fahrzeugsitzanordnung nach einem der vorhergehenden Ansprüche, **dadurch gekennzeichnet, dass** mehrere Gleichstrommotoren (11) bei Vorliegen des Pre-Crash-Signals (S3) gleichzeitig mit hohen Schnellverstellungsgeschwindigkeiten betrieben werden.

9. Fahrzeugsitzanordnung nach einem der vorhergehenden Ansprüche, **dadurch gekennzeichnet, dass** die Steuereinrichtung (12) in den Gleichstrommotor (11) integriert ist.

10. Fahrzeugsitzanordnung nach einem der Ansprüche 1 bis 8, **dadurch gekennzeichnet, dass** die Steuereinrichtung (12) in eine andere Steuereinrichtung, z. B. die zentrale Steuereinrichtung des Fahrzeugsitzes (1), integriert ist.

## Claims

1. Vehicle seat arrangement with at least one electrical adjustment, the vehicle seat arrangement (1) having
a direct current motor (11) for adjusting at least one vehicle seat component (2, 4, 5) with direct current terminals (e1, e2) to receive a motor current (I),
a controller (12) to control or regulate the direct current motor (11), said controller (12) applying a direct voltage (Ue) to the direct current terminals (e1, e2) depending on the adjustment speed to be set,
the controller (12), if a comfort adjustment signal (S2) is present, controlling the at least one direct current motor (11) for a slow comfort adjustment of the at least one vehicle seat component (2, 4, 5),
and the controller (12), if a pre-crash signal (S3) is present, controlling the at least one direct current motor (11) for a pre-crash rapid adjustment of the vehicle component (2, 4, 5) from an existing initial position into a safe pre-crash position,
**characterized in that**
setting data of the safe pre-crash position are stored in a memory device (20),
setting data of the initial position before the pre-crash adjustment are stored in a memory device (20), the pre-crash rapid adjustment is carried out with a maximum permitted loading and acceleration of the direct current motor (11) at the existing operating point, and
the direct current motor (11) has at least one winding (11.2) which is connected to the direct current terminals (e1, e2) and one permanent magnet unit (11.1),
a characteristics field of the direct current motor (11) has at least one region (C) in which motor currents (I) which are greater than a critical limit current (Iₖᵣᵢₜ) for maintaining the magnetisation of the permanent magnet unit occur,
a current limitation circuit (10) to limit the motor current (I) which flows through the at least one winding (11.2) to the critical limit current (Iₖᵣᵢₜ) or below the critical limit current (Iₖᵣᵢₜ) is provided, and
the unpermitted region (C) occurs in the case of low engine rotational speeds (n) and high engine torque (m).

2. Vehicle seat arrangement according to Claim 1, **characterized in that** the memory device (20) is integrated in the controller (12) or connected to it.

3. Vehicle seat arrangement according to Claim 1 or 2, **characterized in that** if a crash case has not occurred, the at least one vehicle seat component (2, 4, 5) is moved back, automatically or after receiving an actuation signal (S4), into the last set initial position.

4. Vehicle seat arrangement according to one of the preceding claims, **characterized in that** the unpermitted region (C) is relevant in the case of a starting process of the direct current motor (11) during the pre-crash adjustment, and is excluded by the current limitation circuit (10).

5. Vehicle seat arrangement according to Claim 4, **characterized in that** the direct current motor (11) is operated in the starting process with a constant motor current (I) below the limit current (Iₖᵣᵢₜ) until a limit rotational speed (ng), above which the motor current (I) runs in the characteristics field below the limit current (Iₖᵣᵢₜ), is reached.

6. Vehicle seat arrangement according to one of the preceding claims, **characterized in that** the engine rotational speed (n) is set by regulation by pulse width modulation (PWM).

7. Vehicle seat arrangement according to one of the preceding claims, **characterized in that** one or more direct current motors (11) are provided for adjusting at least one of the following components:
length adjustment of the seat (1),
tilting or swivelling of the back rest (4),
adjusting the seat cushion (2),
height adjustment of the head restraint (5).

8. Vehicle seat arrangement according to one of the preceding claims, **characterized in that** if the pre-crash signal (S3) is present, multiple direct current motors (11) are operated simultaneously at high rapid adjustment speeds.

9. Vehicle seat arrangement according to one of the preceding claims, **characterized in that** the controller (12) is integrated in the direct current motor (11).

10. Vehicle seat arrangement according to one of Claims 1 to 8, **characterized in that** the controller (12) is integrated in another controller, e.g. the central controller of the vehicle seat (1).

## Revendications

1. Arrangement de siège de véhicule avec un dispositif de réglage électrique au moins, l'arrangement de sièges de véhicule (1) présentant :
un moteur à courant continu (11) pour le réglage d'un composant de siège de véhicule (2, 4, 5) au moins avec des raccords de courant continu (e1, e2) pour l'absorption d'un courant moteur (I),
un dispositif de commande (12) pour la commande ou le réglage du moteur à courant continu (11), dispositif de commande qui applique une tension continue (Ue) aux raccords de courant continu (e1, e2) en fonction de la vitesse à régler,
le dispositif de commande (12) commandant l'amorçage de l'au moins un moteur à courant continu (11) pour un lent réglage confortable de l'au moins un composant de siège de véhicule (2, 4, 5),
le dispositif de commande (12) commandant l'amorçage de l'au moins un moteur à courant continu (11) pour un réglage rapide « avant crash » du composant de siège de véhicule (2, 4, 5), depuis une position de initiale actuelle vers une position de sécurité « avant crash », lorsqu'un signal « avant crash » est présent,
**caractérisé en ce que**
les données de réglage de la position de sécurité « avant crash » sont mémorisées dans un dispositif de mémoire (20),
les données de réglage de la position initiale préalable au réglage « avant crash » sont mémorisées dans un dispositif de mémoire (20),
le réglage rapide « avant crash » est effectué avec une charge et une accélération maximales admissibles du moteur à courant continu (11) au point opérationnel respectif et **en ce que**
le moteur à courant continu (11) présente au moins un enroulement (11.2) relié aux raccords de courant continu (e1, e2) et une unité à aimants permanents (11.1),
un réseau de caractéristiques du moteur à courant continu (11) présente au moins une zone (C), dans laquelle apparaissent des courants moteurs (I), qui sont supérieurs à une intensité de courant limite critique (Iₖᵣᵢₜ) pour le maintien de la magnétisation de l'unité à aimants permanents,
un circuit limiteur de courant (10) est prévu pour limiter le courant moteur (I) traversant l'au moins un enroulement (11.2) à l'intensité de courant limite critique (Iₖᵣᵢₜ) ou à une valeur inférieure à l'intensité de courant limite critique (Iₖᵣᵢₜ) et **en ce que**
la zone (C) inadmissible apparaît à un nombre de tours du moteur (n) faible et à un couple moteur (m) élevé.

2. Arrangement de siège de véhicule suivant la revendication 1, **caractérisé en ce que** le dispositif de mémoire (20) est intégré dans le dispositif de commande (12) ou relié à celui-ci.

3. Arrangement de siège de véhicule suivant la revendication 1 ou 2, **caractérisé en ce que** l'au moins un composant de siège de véhicule (2, 4, 5) est retourné automatiquement ou après réception d'un signal de confirmation (S4) à la dernière position initiale réglée lorsque la situation de crash n'est pas survenue.

4. Arrangement de siège de véhicule suivant une des revendications précédentes, **caractérisé en ce que** la zone inadmissible (C) est importante pour le processus de démarrage du moteur à courant continu (11) lors du réglage « avant crash » et qu'elle est exclue par le circuit limiteur de courant (10).

5. Arrangement de siège de véhicule suivant la revendication 4, **caractérisé en ce qu'**au cours du processus de démarrage, le moteur à courant continu (11) est alimenté en un courant moteur constant (I) au dessous de l'intensité de courant limite (Iₖᵣᵢₜ) jusqu'à ce qu'un nombre de tours limite (ng) soit atteint, au-dessus duquel le courant moteur (I) passe dans le réseau de caractéristiques au-dessous de l'intensité de courant limite (Iₖᵣᵢₜ).

6. Arrangement de siège de véhicule suivant une des revendications précédentes, **caractérisé en ce que** le nombre de tours du moteur (n) est réglé via un réglage par modulation d'impulsions en largeur (MIL).

7. Arrangement de siège de véhicule suivant une des revendications précédentes, **caractérisé en ce qu'**un ou plusieurs moteurs à courant continu (11) sont prévus pour le réglage d'un des composants suivants au moins:
Réglage longitudinal du siège (1),
Rabattement ou pivotement du dossier (4)
Réglage de l'assise (2),
Réglage en hauteur de l'appui-tête (5)

8. Arrangement de siège de véhicule suivant une des revendications précédentes, **caractérisé en ce que** plusieurs moteurs à courant continu (11) sont actionnés simultanément à des vitesses élevées de réglage rapide en cas de présence d'un signal « avant crash » (S3).

9. Arrangement de siège de véhicule suivant une des revendications précédentes, **caractérisé en ce que** le dispositif de commande (12) est intégré dans le moteur à courant continu (11).

10. Arrangement de siège de véhicule suivant une des revendications 1 à 8, **caractérisé en ce que** le dispositif de commande (12) est intégré dans un autre dispositif , par exemple dans un dispositif de commande central du siège de véhicule (1).
